# EUROPEAN PATENT APPLICATION

(11) **EP 1 953 506 A1**
(43) Date of publication of application: **06.08.2008**
(21) Application number: 07002069.8
(22) Date of filing: 31.01.2007
(51) Int. Cl.: G01F 15/06, B05B 1/18, E03C 1/05

(54) **Electronic control system for fluid delivery and supply for sink, bathtub, shower and the like**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

Electric system (100) for controlling the supply and delivery of fluid in a kitchen sink, bathtubs, showers and similar, comprising a mixing group (1) having inlets (11,12) that can be connected to respective fittings of a cold and hot water distribution network and motorized means (23,24) for controlling a respective valve (9,10) arranged on the fluid path between each of the inlets and a delivery outlet, said electric control system comprising an electronic unit (35) for sending control commands of said motorized means, wherein it comprises a user control device (101) for remote electrical adjustment of said supply and delivery of fluid comprising a circuit board (131), said control system comprising wireless communication interfaces (141,36) for communication between said circuit board and said electronic unit.

## Description

### Filed of application

The present invention relates to an electric system for controlling the supply and delivery of fluid for kitchen sinks, baths, showers and similar, comprising a mixing group, equipped with motorized means for electric adjustment of such supply and delivery.

More specifically, the invention refers to an electric control system of the type indicated above in which the electrical adjustment controls the flow and the temperature of the fluid through a diffusing jet of the mixing group.

The invention also relates to an electric system for controlling a delivery mode of the fluid through the diffusing jet, from a central nozzle for a cohesive jet or from a plurality of peripheral nozzles for a perimetric jet.

### Prior Art

As is well known to the man skilled in the art, there are currently on the market multiple systems for controlling mixing groups for kitchen sinks, baths, showers and similar.

Generally, such mixing groups comprise a monoblock, for example installed under the sink, close to hydraulic fittings for distributing cold and hot water, for joining a diffusing jet to such hydraulic fittings through a flexible pipe.

The electric system for controlling the mixing group allows adjustment of the supply of fluid, to supply and adjust the cold, hot and mixed water jet to be delivered through the diffusing jet.

The electric control system can be of various types for example installed on a tap projecting above the sink, the diffusing jet of which is the delivery end, and equipped with a manual command lever on top or at the side for opening and intercepting the flow of water, as well as for mixing the cold and hot water in the mixing group.

Some control systems provide command levers or buttons on the diffusing jet itself, for example a mechanical button, which allows the flow of water to be deviated from a centralized delivery through a central nozzle, for a cohesive delivery of water, to a perimetrically diffused spray delivery, through a plurality of small nozzles arranged in a crown around the central nozzle.

Whilst advantageous from various points of view, these known solutions have a common limitation due to the fact that a user must first actuate a command lever to enable the mixing group to supply water towards the diffusing jet, then he must adjust the flow of the fluid or the temperature, for example positioning the command lever and finally he must switch the delivery mode of the flow, by actuating the command mounted on the jet.

The technical problem at the basis of the present invention is to devise an electric system for controlling a mixing group having structural and functional characteristics such as to allow it to have simplified actuation, removing the lever for turning on the flow on the tap, overcoming the limitations of the solutions currently proposed by the

### prior art.

Another purpose of the present invention is to provide a control device that provides all the commands for actuating and adjusting the flow of fluid to be delivered remotely from the diffusing jet.

### Summary of the invention

The solution idea at the basis of the present invention is to provide a control device that is separate from the mixing group and from its diffusing jet, for driving motorized means for intercepting and/or adjusting the fluid associated to the mixing group.

In this way it is made substantially superfluous to have a command lever of the monocommand mixing tap, so that the command of the motorized means for intercepting and/or adjusting the fluid is activated remotely through the control device, for example by setting a predetermined flow of fluid for fast or gradual filling of the sink or by remotely selecting a predetermined temperature of the fluid.

According to such idea of solution the electric system for controlling the supply and delivery of fluid according to the present invention comprises a mixing group having fluid supply inlets that can be connected to respective fittings of a mains cold and hot water distribution network, and motorized means for controlling a respective valve arranged on the fluid path between each of the inlets and a delivery outlet from the mixing group, said electric control system comprising an electronic unit for sending control commands for controlling the motorized means, characterized in that it comprises a user control device for remote electrical adjustment of the supply and delivery of fluid comprising a circuit board, the electric control system comprising wireless communication interfaces for communication between the circuit board and the electronic unit.

The characteristics and advantages of the electric control system of the present invention shall become clearer from the following description of an example embodiment thereof, given for indicating and not limiting purposes, with reference to the attached drawings.

### Brief description of the attached drawings

- figure 1 shows a schematic view of an electric control system according to the present invention;
- figure 2 shows a schematic view of a mixing group and a control device of the electric control system of figure 1;
- figure 3 shows a view of just the mixing group, without hydraulic and electrical connections;
- figure 4a shows a perspective view of just the control device;
- figure 4b shows a side view of the control device of figure 4a;

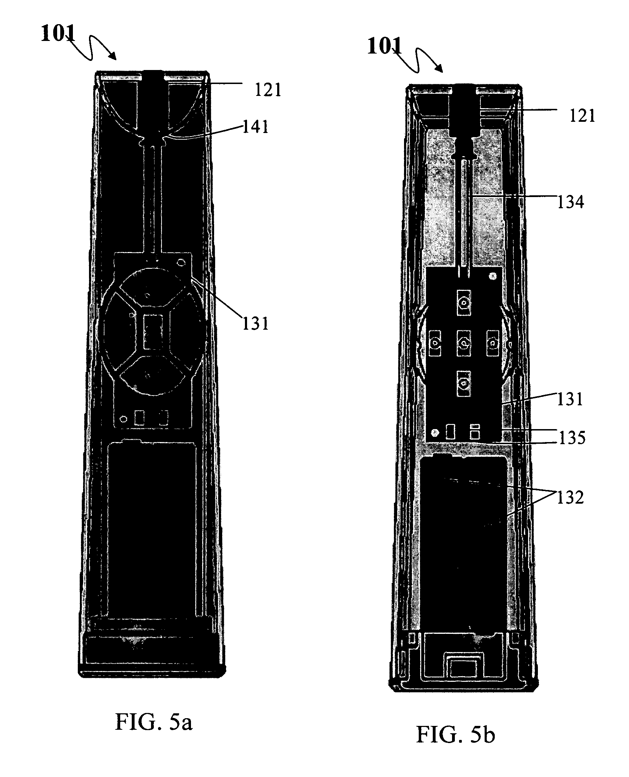

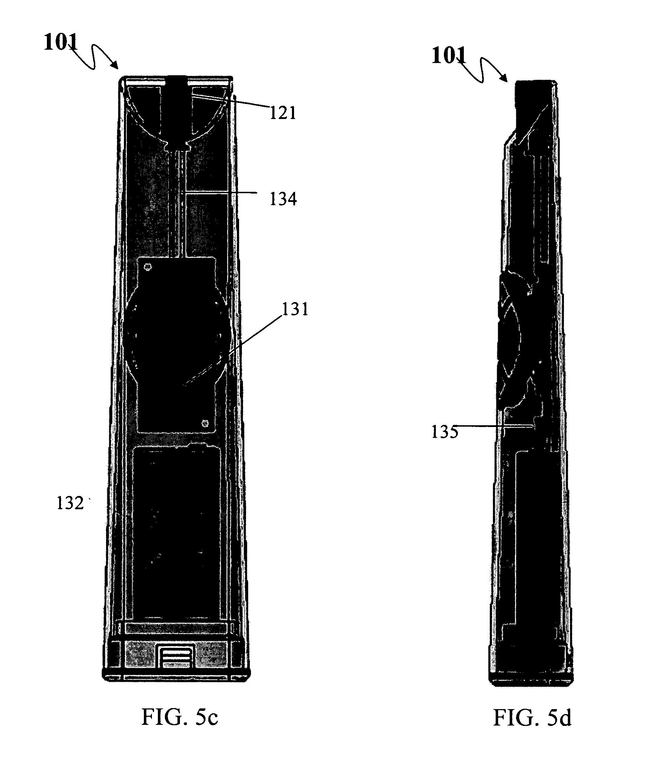

- figures 5a-5d show the control device according to a section seen from above, from below, according to a further section from above and a side section;
- figure 6 shows a schematic view of an electric control system, according to a different embodiment of the present invention;
- figure 7 shows a schematic block diagram of an electronic unit associated with the adjustment group according to the present invention;
- figure 8 shows a schematic view of an electric control system, according to a further embodiment of the present invention;

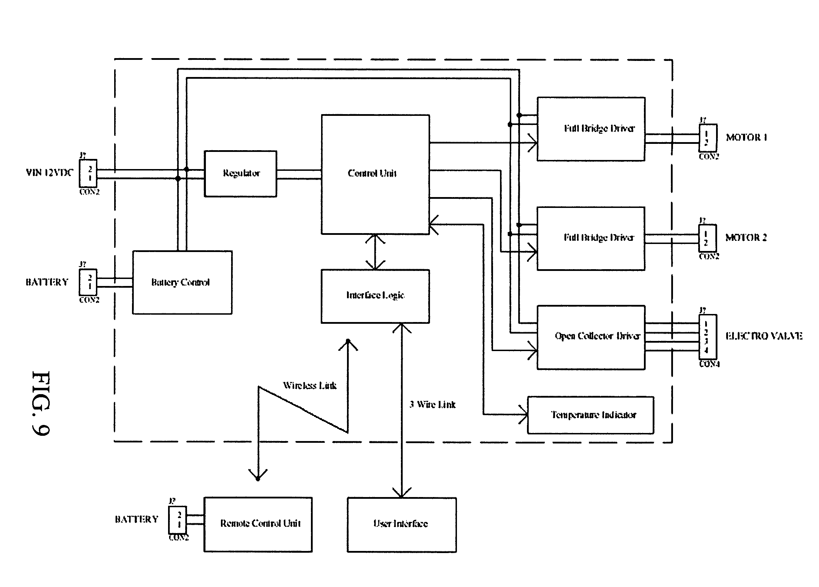

- figure 9 shows a schematic block diagram of a control device associated with the adjustment group according to the present invention.

### Detailed description

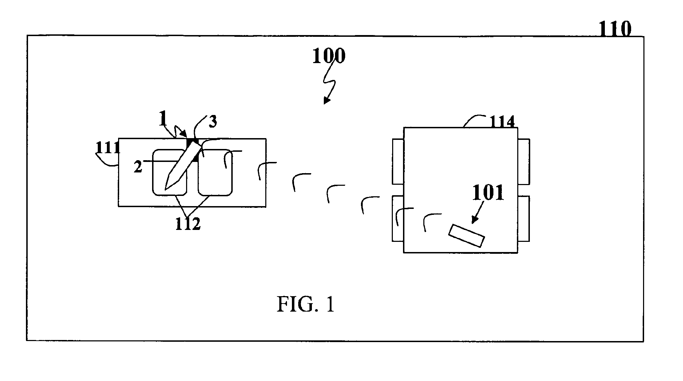

With reference to such figures, and in particular to the example of figure 1, an electric system for controlling the supply and delivery of fluid according to the present invention is globally and schematically indicated with 100.

In particular, the electric control system 100 comprises a mixing group 1, for delivering and intercepting the fluid through motorized means, and a user control device 101, for activating such motorized means.

Purely as an example and without reducing the scope of protection of the present invention, figure 1 schematically represents a room in a home, for example a kitchen 110 with a sink 111, comprising a pair of bowls 112 for collecting water delivered through the mixing group 1.

The user control device 101 is represented in figure 1 on a support plane, for example on a shelf 114, arranged near to the sink 111.

As can clearly be seen from the following description, the electric control system 100 according to the present invention is suitable for being installed and used in different rooms, for example in a bathroom, for controlling the supply and delivery of fluid into a bath or into a shower but also in substantially non-domestic rooms.

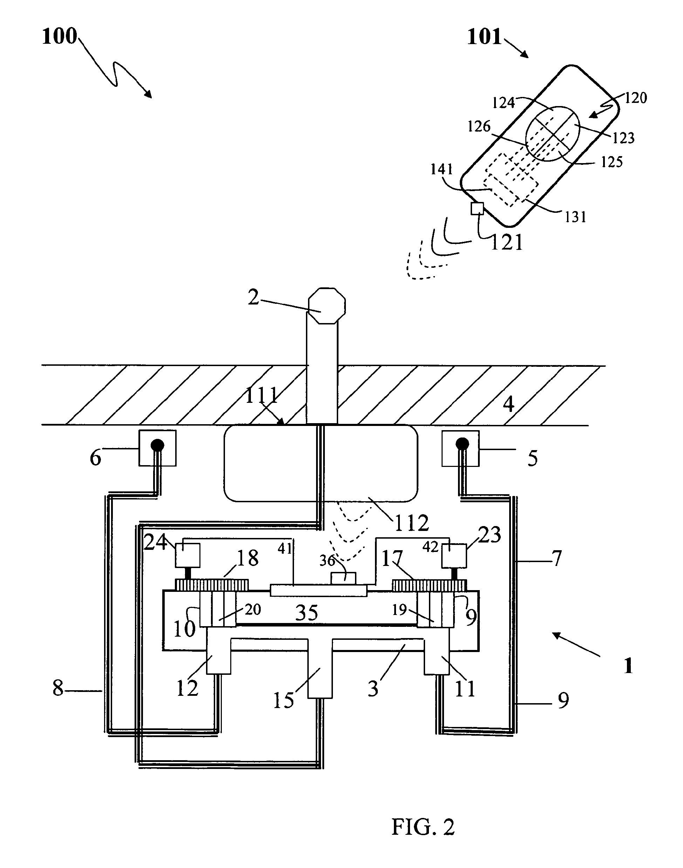

More specifically, with reference to figure 2, the mixing group 1 comprises a diffusing jet 2 and a joining monolithic body or monoblock 3 installed at the wall 4 near to the respective cold and hot hydraulic water distribution fittings 5 and 6.

The monoblock 3 can be installed under the sink 111, which is normally positioned above and in the vicinity of the aforementioned fittings 5, 6.

Of course, there is no reason why the monoblock 3 cannot be installed in a different location, for example above the sink 111 or else hidden in a suitable recess made in the wall 4 and possibly closed by a door.

In accordance with what has been stated previously, the mixing group 1 of the supply and delivery of fluid can be installed in a bathroom, under a wash basin, or else in the vicinity of a bathtub.

The monoblock 3 comprises respective fluid supply inlets respectively connected to fittings 5 and 6 of a mains cold and hot water distribution network through flexible pipes 7, 8.

Such inlets 11, 12 are in fluid communication with a delivery outlet 15 situated in the monoblock 3 for example in an intermediate and equidistant position with respect to the aforementioned inlets 11, 12.

A respective valve 9, 10 is arranged on the fluid path between each of the fluid supply inlets 11, 12 and the delivery outlet 15. The valves 9 and 10 are for intercepting fluid, but they are also able to adjust its flow rate according to the degree of angular displacement of their stem.

More specifically, a first valve 9 is housed in a respective seat formed in the monoblock 3 at the side of the cold water fitting 5 and, similarly, a second valve 10 is housed in a corresponding seat formed in the monoblock 3 at the side of the hot water fitting 6.

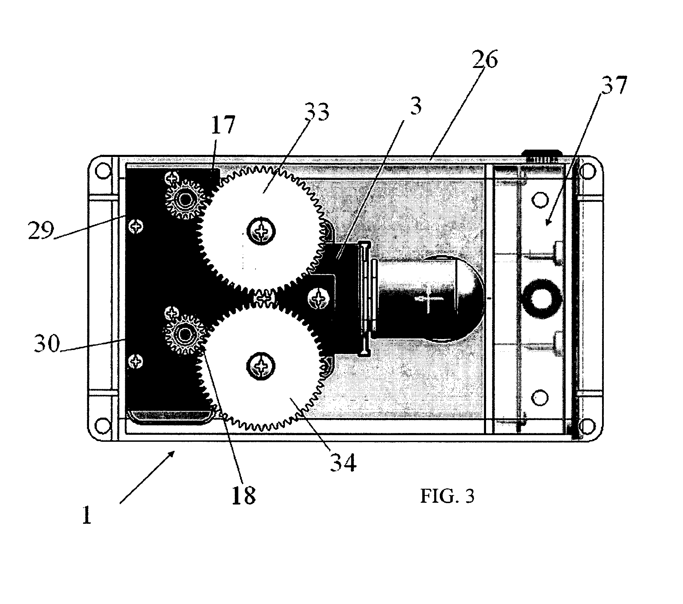

The valves 9 and 10 have progressive actuation and are equipped with respective command stems 19, 20 projecting outside of the valve seat and made to rotate as a unit with a respective gear 33, 34, which can be seen more clearly in the example of figure 3.

The electric control system 100 according to the invention foresees that the mixing group 1 comprises motorized means for electric actuation of the valves 9, 10. Such motorized means comprise respective small electric motors 23, 24 each having its own rotation shaft firmly connected with a respective gear 33, 34 of the valves 9, 10.

Each small electric motor is, for example, of the geared motor type using direct current and is controlled electrically by a respective power output of an electronic command and control unit 35 described later on.

In greater detail, the small electric motor 23 makes the control gear 29 rotate, whose toothing is engaged in the toothing of the gear 33 firmly connected to the stem of the valve 9.

Similarly, the small electric motor 24 makes the control gear 30 rotate, whose toothing is engaged in the toothing of the gear 34 firmly connected to the stem of the valve 10. A predetermined transmission or reduction ratio is foreseen between the gears 30 and 34 that allows each geared motor to adjust the opening of the relative valve with particular precision.

Therefore, each small electric motor 23, 24 adjusts the opening of the respective valve 9, 10 and, consequently, the fluid flow rate of the cold and hot water, respectively.

According to the electric control system 100 of the present invention, the user control device 101 sends commands to the electronic unit 35, for actuation of the motorized means 23, 24 to actuate the valves 9 and 10, in order to adjust the temperature of the fluid and/or its flow rate.

In a preferred embodiment of the electric control system 100, the user control device 101 is intended to control the electronic unit 35 in the absence of electrical cabling going to it, i.e. through wireless communication.

As schematically represented in figure 2, such an electric control system 100 comprises wireless communication interfaces 36, 141 respectively on the electronic unit 35 and on the user control device 101, to carry out the wireless communication, for example in radio frequency or in accordance with a per se conventional wireless communication protocol.

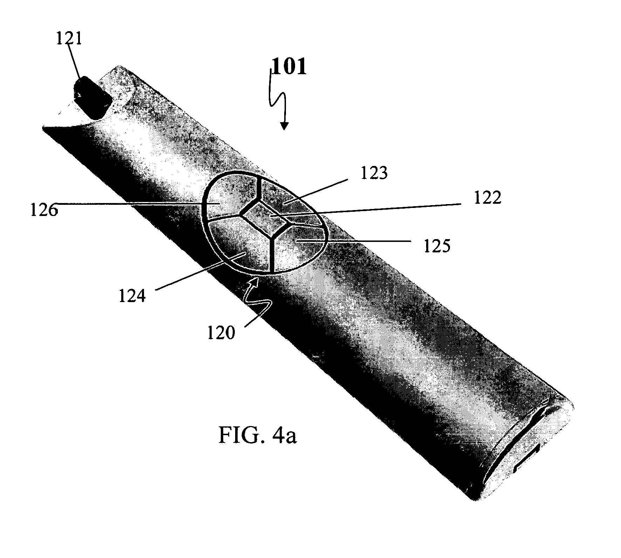

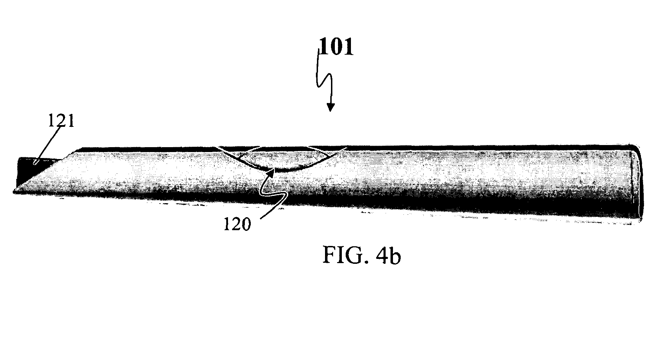

As represented in figures 4a-4b, the user control device 101 is quipped with a user interface 120 comprising a pair of buttons 123 and 124 for adjusting the temperature of the fluid, respectively to increase and reduce the temperature, and a pair of buttons 125 and 126 for adjusting the flow of fluid, respectively to increase and reduce the flow of fluid.

The buttons 123-126 have progressive actuation and thus allow the flow rate or the temperature of the fluid to be adjusted gradually.

The electric control system 100 comprises an LED 121, situated in a clearly visible portion of the user control device 101, for example on the front, and lights up in a predetermined colour, corresponding to a temperature set with the temperature buttons 123, 124.

For example, the emission of a red light from the LED 121 corresponds to a temperature of the fluid being delivered above a certain threshold value whereas the emission of a blue light indicates a temperature of such a fluid below a certain threshold value.

Advantageously, the light emitted by the LED 121 can assume colours of different intensity or progressively variable colours, substantially in proportion to the variation of the temperature of the fluid.

More specifically, the user control device 101 comprises a circuit board 131 for receiving the command selected through the buttons 122-126 of the user interface 120. The circuit board 131 comprises the wireless communication interface 141 of the user control device 101, intended to transmit the commands to the corresponding wireless communication interface 36 of the electronic unit 35.

Of course, such a wireless communication interface can be integrated in the device 101 as a self-standing unit, connected in a per se conventional way to the circuit board 131 to receive the commands of the user interface 120 and to transmit them to the wireless communication interface 36 of the electronic unit 35.

According to a different embodiment of the present invention, the electric control system 100 comprises a wireline communication interface 151 made through one or more direct electrical connections between the circuit board 131 of the user control device 101 and the electronic unit 35 of the mixing group 1. The electrical connections of the wireline interface 151 run inside a protective sheath of such a pipe, for example under the sink 111.

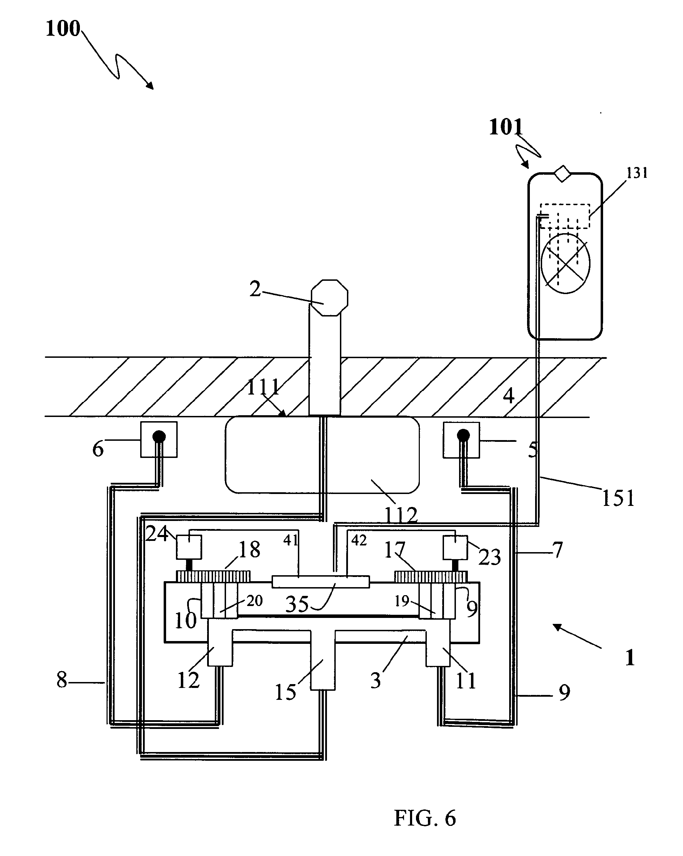

With reference to this different embodiment and to figure 6, without however limiting the scope of protection of the present invention, the user control device 101 is positioned at the wall, above the support plane of the sink 111, and is connected through the wireline communication interface 151 to the circuit board 35.

A command selected through the user interface 120 on the user control device 101 is sent through a per se conventional wireline communication protocol to the electronic unit 35 that controls the opening/closing of the valves 9, 10, to adjust the flow of fluid or its temperature.

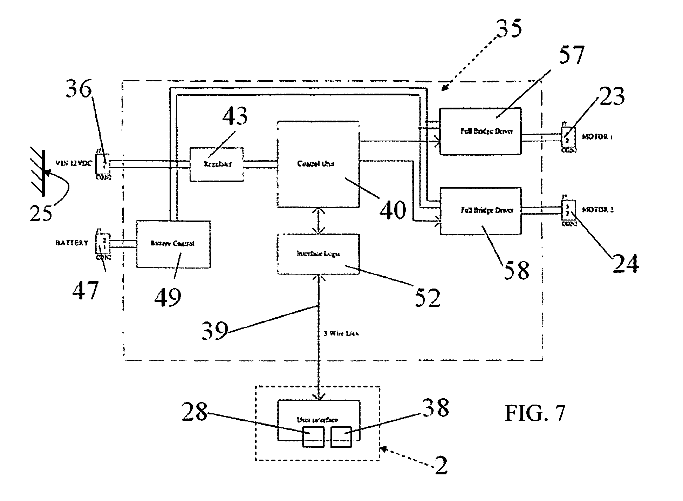

In the following description and with reference to figures 3 and 7, the structure of the connections and of the electrical interconnections between the electronic unit 35 and the components of the mixing group 1 of the fluid supply and delivery is shown schematically.

The electronic unit 35 is advantageously housed in a watertight portion 37 of a protective casing 26 of the mixing group 1.

The casing 26 is made from plastic synthetic material that is transparent (although not necessarily) to allow the components of the mixing group 1 to be quickly seen and inspected during maintenance. On one side of the casing 26 there is, indeed, the portion 37 for housing the electronic unit 35 that is fed with electrical voltage through an external transformer 36 inserted in a wall socket 25, foreseen near to the hydraulic fittings 5, 6.

Respective electrical connections 41, 42 are foreseen between the unit 35 and each of the small electric motors 23, 24.

The electronic unit 35 comprises a control unit 40 that is fed with power by the external transformer 36 through a voltage regulator 43. The electronic unit 35 is housed on a support board contained in the portion 37 of the casing 26.

A removable external battery 47 is also foreseen to keep the functionality of the electronic unit 35 even in the case of a power cut. On the board of the unit 35 there is a circuit portion 49 intended to regulate the power supply coming from the battery 47.

The control unit 40 can be a microcontroller with integrated circuit and comprises a plurality of command outlets to enable respective bridge or half-bridge outlet stages 57, 58 of power transistors to command the small electric motors 23, 24 of the valves 9 and 10.

As already stated, the wireless communication interface 36 or the wireline communication interface 252 is also foreseen in two-directional connection with the control unit 40 and with the commands 123-126 of the user control device 101, directly or through the wireless communication interface 141 of the user control device 101.

In the electronic unit 35, it is also foreseen for there to be a connection with a temperature sensor installed for example near to the outlet 15 of the monoblock 3 or near to the electrovalves 44, 46.

The user interface 120 on the user control device 101 comprises a button 122, the selection of which sends a command to the electronic unit 35, through the circuit board 131 and the wireless communication interface 141 or the wireline communication interface 151, to control the electrovalves 44 and 46 and to switch the delivery mode of the flow of fluid through the mixing group 1, for example to switch from central delivery to peripheral delivery or vice-versa.

The electronic unit 35 sends a temperature value detected through the temperature sensor back to the user control device 101.

A display 60, in a clearly visible portion of the user device 101, allows the user to see the temperature value of the flow of water being delivered.

Should it not have been made clear in the previous description, according to the electric control system 100 of the present invention, the diffusing jet 2 can keep the known mechanical structure that allows the delivery of the flow of water to be switched from a centralized delivery through a central nozzle that delivers a cohesive flow to a perimetrically diffused spray delivery through a plurality of small nozzles arranged in a crown around the central nozzle.

This possibility of manually switching the delivery of fluid does not interfere at all with the electrical command solution illustrated previously that concerns the possibility of adjusting the opening and closing of the flow of water as well as the adjustment of temperature and flow rate.

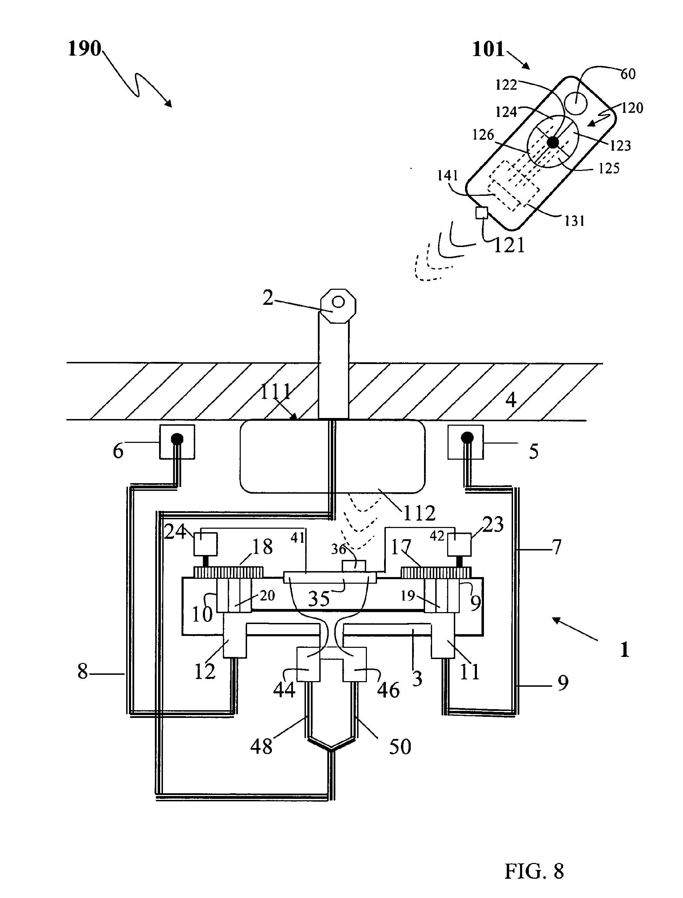

In a variant embodiment schematically illustrated in figure 8, an electric system for controlling the supply and delivery of fluid according to the present invention, indicated with reference numeral 190, is equipped with an additional function that concerns the possibility of switching the delivery of the flow of water centrally or peripherally from the body of the diffuser through an electric command.

In this variant embodiment details and cooperating parts having the same structure and operation as the previous example embodiment shall be indicated with the same reference numerals.

As shall be clear from the rest of the description, this electrical switching is not obtained according to the present invention through a simple transformation of the known mechanical manual command, but rather through a totally innovative technical solution.

For this purpose, two fluid interception electrovalves 44, 46 are foreseen again situated in the mixing group 1 but immediately downstream of the delivery outlet 15.

Each of the two electrovalves 44, 46 is situated upstream of a respective flexible pipe 48, 50 for supplying fluid through the diffusing jet 2.

More specifically, the two corresponding flexible supply pipes 48, 50 are coupled together longitudinally and parallel to form a single hydraulic connection towards the diffusing jet 2.

Even more specifically, the flexible pipe 48 is in communication with the central delivery nozzle of the cohesive fluid, whereas the other flexible pipe 50 is in fluid communication with the plurality of perimetric nozzles arranged in a crown around the central nozzle in the diffusing jet 2.

Moreover, each of the two interception electrovalves 44 and 46 is electrically connected to the electronic unit 35.

By simply pressing the button 122 on the user control device 101, the user switches the delivery of fluid from the central nozzle to the peripheral nozzles, and vice-versa, through the closing of just one of the two electrovalves 44 or 46, for example the one associated with the pipe that must not be fed with the water from the outlet 15 of the monoblock 3. In other words, pressing on the button 122 of the user control device 101 controls the switching open and closed of the two electrovalves 44, 46, so that when one of them is open, the other is kept closed.

From the previous description it can clearly be seen that the electric control system 100 according to the invention solves the technical problem and offers numerous advantages, the first of which is given by the fact that through the actuation of the buttons present on the user control device 101 it is possible to open the flow of fluid and adjust its temperature and flow rate without going up to the sink or the bathtub, setting the flow of the fluid, for example to fill the bathtub more or less quickly, and also selecting a desired temperature.

The invention makes it totally superfluous to have a mechanical command lever associated with a diffusing jet 2. The display on the user control device 101 allows the temperature of the fluid being delivered to be controlled, without going up to the diffusing jet.

Moreover, the command and adjustment of the flow of water is simple and effective so as to make holding the user control device 101 substantially the only manual action necessary for the delivery of the flow of fluid.

## Claims

1. Electric system (100) for controlling the supply and delivery of fluid in kitchen sinks, bathtubs, showers and similar, comprising a mixing group (1) having fluid supply inlets (11, 12) that can be connected to respective fittings (5, 6) of a mains cold and hot water distribution network, and motorized means (23, 24) for controlling a respective valve (9, 10) arranged on the fluid path between each of the inlets (11, 12) and a delivery outlet (15) from the mixing group (1), said electric control system comprising an electronic unit (35) for sending control commands of said motorized means (23, 24), **characterized in that** it comprises a user control device (101) for remote electrical adjustment of said supply and delivery of fluid comprising a circuit board (131), said control system comprising wireless communication interfaces (141, 36) for communication between said circuit board (131) and said electronic unit (35).

2. Electric control system (100) according to claim 1, **characterized in that** said user control device (101) comprises activation buttons of said control commands through said interfaces (141, 36).

3. Electric control system (100) according to claim 2, **characterized in that** said activation buttons comprise buttons for increasing and decreasing the flow of fluid (125, 126) and/or buttons for increasing and decreasing the temperature of the fluid (123, 124).

4. Electric control system (100) according to claim 3, **characterized in that** said buttons for increasing and decreasing the flow of fluid (125, 126) and/or said buttons for increasing and decreasing the temperature (123, 124) have progressive actuation.

5. Electric control system (100) according to claim 4, **characterized in that** said control device comprises an LED (121) to emit a light of an intensity and/or colour indicative of a temperature of said fluid.

6. Electric control system (100) according to claim 5, **characterized in that** said pair of valves (9, 10) respectively connected to said hot and cold water inlets (5, 6) through pipes (7, 8) are regulated by said electronic unit (35) through said control commands.

7. Electric control system (100) according to claim 6, **characterized in that** said electronic unit (35) comprises a temperature sensor, for detecting a temperature value of said fluid, and said user control device (101) comprises a temperature display (60), to show said temperature value.

8. Electric control system (100) according to claim 2, **characterized in that** it comprises a wireline communication interface (151), comprising electrical connection cables between said circuit board (131) and said electronic unit (35).

9. Electric system (100) for controlling the supply and delivery of fluid in kitchen sinks, bathtubs, showers and similar, comprising a mixing group (1) having a pair of fluid interception electrovalves (44, 46), connected to a respective flexible pipe (48, 50) for supplying the fluid to a central nozzle and to a perimetric nozzle of a diffusing jet (2), **characterized in that** it comprises a user control device (101), for remote electrical adjustment of said supply and delivery of fluid, said electric control system comprising wireless communication interfaces (141, 36) for controlling said electrovalves (44, 46) through said user control device (101).

10. Electric system (100) for controlling the supply and delivery of fluid in kitchen sinks, bathtubs, showers and similar, suitable for controlling a mixing group (1) that can be controlled electronically, **characterized in that** it comprises a user control device (101) for remote electrical adjustment of said supply and delivery of fluid, said user control device (101) being structurally independent.
